(19) Europäisches Patentamt
European Patent Office
Office européen des brevets

(11) **EP 4 443 687 A1**

(12) **EUROPÄISCHE PATENTANMELDUNG**

(43) Veröffentlichungstag:
**09.10.2024 Patentblatt 2024/41**

(21) Anmeldenummer: **23166512.6**

(22) Anmeldetag: **04.04.2023**

(51) Internationale Patentklassifikation (IPC):
**H02J 3/01** (2006.01)     **H02J 3/14** (2006.01)

(52) Gemeinsame Patentklassifikation (CPC):
**H02J 3/14; H02J 3/01;** H02J 2310/50

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Fronius International GmbH
4643 Pettenbach (AT)**

(72) Erfinder: **Danmayr, Joachim
4643 Pettenbach (AT)**

(74) Vertreter: **Bratovic, Nino Maria
Bratovic IP
Lissi-Kaeser-Straße 20
80797 München (DE)**

(54) **VERFAHREN ZUR VERMEIDUNG EINES STROMAUSFALLS IN EINEM ELEKTRISCHEN NETZ**

(57) Verfahren und Vorrichtung zur Vermeidung eines Stromausfalls in mindestens einem elektrischen Teilnetz (TN), das zur Stromversorgung von elektrischen Verbrauchern, v, des Teilnetzes (TN) an ein Übertragungsnetz (ÜN) angeschlossen ist. Die elektrischen Verbraucher, v, des Teilnetzes (TN) sind in eine Anzahl, N, verschiedener Gruppen (G1, G2,...Gi...GN) mit unterschiedlicher Prioritäten (p1,p2, ...pi...pN) eingeteilt. Das auf einer Steuerung des Teilnetzes (TN) ausführbare Verfahren umfasst die Schritte: Berechnen (S1) einer insgesamt erforderliche Gesamtreduktions-Strommenge, Ired-gesamt, mit welcher die durch alle Verbraucher, v, des Teilnetzes (TN) aktuell verbrauchte elektrische Gesamt-Strommenge, Iakt-gesamt, zur Vermeidung einer erkannten Überlast in dem Teilnetz (TN) zu reduzieren ist; Ermitteln (S2) einer Gruppen-Sollstrommenge (IsollGi) für jede eingeteilte Gruppe (Gi) von Verbrauchern, v, auf Basis der insgesamt erforderlichen Gesamtreduktions-Strommenge, Ired-gesamt, und einer durch die jeweilige Gruppe (Gi) einsparbaren Strommenge; Berechnen (S3) von Sollströmen (Isoll-v) für die elektrischen Verbraucher, v, der eingeteilten Gruppen (G1, G2,...Gi...GN) des Teilnetzes (TN) in Abhängigkeit der ermittelten Gruppen-Sollstrommenge (IsollGi) und Reduzieren (S4) der aktuell durch die Verbraucher, v, der jeweiligen Gruppe (Gi) verbrauchte Strommenge rechnerisch solange bis die für die jeweilige Gruppe (Gi) ermittelte Gruppen-Sollstrommenge (Isoll Gi) erreicht wird.

FIG. 1

**Beschreibung**

Die Erfindung betrifft ein Verfahren und eine Vorrichtung zur Vermeidung eines Stromausfalls in einem elektrischen Netz, insbesondere in einem Teilnetz, das mit einem Übertragungsnetz verbunden ist.

In einem elektrischen Verteilnetz muss zu jedem Zeitpunkt die den Verbrauchern zur Verfügung gestellte elektrische Energie gleich der erzeugten bzw. bereitgestellten elektrischen Energie sein. Ein Ungleichgewicht hat Netzinstabilitäten zur Folge und kann im schlimmsten Fall zu einem Zusammenbruch der Stromversorgung in mindesten einem Teilnetz führen

Das Übertragungsnetz und die daran angeschlossenen Teilnetze werden daher herkömmlicherweise auf eine maximal mögliche Last, die in den betreffenden Teilnetzen jeweils auftreten kann, ausgelegt. Bei der Planung der Netzinfrastruktur wird diese Maximallast berücksichtigt und die unterschiedlichen Komponenten, beispielsweise Kabel, werden entsprechend ausgelegt. Überstromschutzeinrichtungen werden verbaut, um bei einer Überschreitung der zulässigen Maximallast einer Beschädigung der Infrastruktur des Netzes vorzubeugen. Sobald die Maximallast für die ein Teilnetz dimensioniert ist überschritten wird, trennen die vorgesehenen Überstromschutzeinrichtungen das betreffende Teilnetz automatisch von dem Versorgungsnetz und verhindern so eine Beschädigung der Netzinfrastruktur.

In Szenarien mit Verbrauchern, deren Stromverbrauch relativ konstant ist, und bei relativ kontinuierlicher Stromerzeugung ist eine Auslegung der Netze und Teilnetze verhältnismäßig einfach. Durch den zunehmenden Einsatz von erneuerbaren Energiequellen und den flexiblen Betrieb von Verbrauchern und Speichern werden jedoch sowohl die Stromerzeugung als auch der Stromverbrauch deutlich volatiler. Konkret erzeugen zum Beispiel Solar- und Windkraftanlagen nur bei Vorherrschen entsprechender Umweltbedingungen ausreichend elektrische Energie. Die erzeugte Energiemenge kann darüber hinaus tageszeitabhängig stark schwanken. Gleiches gilt für Verbraucher, insbesondere Elektroautos, die als sehr große Lasten im Netz auftreten. Zudem sind bei derartigen Verbrauchern sowohl der Zeitpunkt als auch die Menge an verbrauchter elektrischer Energie nur schwer vorhersehbar, da sie vom jeweiligen Nutzerverhalten der Nutzer, beispielsweise der Fahrzeughalter abhängen. In Bezug auf die Elektromobilität sind herkömmliche Teilnetze für diese neuen Anforderungen nicht ausgelegt. Die durch die volatilen Erzeuger und Verbraucher verursachten hohen Leistungsspitzen können somit zu beträchtlichen Beeinträchtigungen beim Betrieb von elektrischen Netzen führen. Im schlimmsten Fall kann es bei Auftreten unvorhergesehener Leistungsspitzen aufgrund der nicht dafür ausgelegten Netzinfrastruktur zu Abschaltungen von Teilnetzen kommen.

Es besteht daher eine Aufgabe der Erfindung darin ein Verfahren und eine Vorrichtung zur Vermeidung eines Stromausfalls in einem elektrischen Netz bei Auftreten unvorhergesehener Leistungsspitzen zu schaffen.

Diese Aufgabe wird erfindungsgemäß durch ein Verfahren mit den im Patentanspruch 1 angegebenen Merkmalen gelöst.

Die Erfindung schafft demnach ein Verfahren zur Vermeidung eines Stromausfalls in mindestens einem elektrischen Teilnetz (TN), das zur Stromversorgung von elektrischen Verbrauchern, v, des Teilnetzes (TN) an ein Übertragungsnetz (ÜN) angeschlossen ist, wobei die elektrischen Verbraucher, v, des Teilnetzes (TN) in eine Anzahl, N, verschiedener Gruppen (G1, G2,...Gi...GN) mit unterschiedlicher Prioritäten (p1,p2, ...pi...pN) eingeteilt sind, mit den Schritten:

Berechnen einer insgesamt erforderlichen Gesamtreduktions-Strommenge, Ired-gesamt, mit welcher die durch alle Verbraucher, v, des Teilnetzes (TN) aktuell verbrauchte elektrische Gesamt-Strommenge, Iakt-gesamt, zur Vermeidung einer erkannten Überlast in dem Teilnetz (TN) zu reduzieren ist;
Ermitteln einer Gruppen-Sollstrommenge (IsollGi) für jede eingeteilte Gruppe (Gi) von Verbrauchern, v, auf Basis der insgesamt erforderlichen Gesamtreduktions-Strommenge, Ired-gesamt, und einer durch die jeweilige Gruppe (Gi) einsparbaren Strommenge (DeltaGi= IaktGi - IminGi) ;
Berechnen von Sollströmen (Isoll-v) für die elektrischen Verbraucher, v, der eingeteilten Gruppen (G1, G2,...Gi...GN) des Teilnetzes (TN) in Abhängigkeit der ermittelten Gruppen-Sollstrommenge (IsollGi) und
Reduzieren der aktuell durch die Verbraucher, v, der jeweiligen Gruppe (Gi) verbrauchte Strommenge solange bis die für die jeweilige Gruppe (Gi) ermittelte Gruppen-Sollstrommenge (Isoll Gi) erreicht wird.

Bei einer möglichen Ausführungsform des Verfahrens werden die Sollströme (Isoll-v) von Verbrauchern, v, innerhalb einer eingeteilten Gruppe (Gi) aus der Gruppen-Sollstrommenge (IsollGi) der jeweiligen Gruppe abgeleitet.

Bei einer möglichen Ausführungsform des Verfahrens werden zur Berechnung der Sollströme (Isoll-v) für die elektrischen Verbraucher, v, der eingeteilten Gruppen (G1, G2,...Gi...GN) des Teilnetzes (TN) für jede der eingeteilten Gruppen (Gi) von elektrischen Verbrauchern, v, des Teilnetzes (TN) beginnend mit der Gruppe (GN) von elektrischen Verbrauchern mit der niedrigsten Priorität (pN) die folgenden Schritte ausgeführt werden:

Berechnen der durch jede eingeteilte Gruppe (Gi) jeweils einsparbaren Strommenge (IsparGi) als Differenz zwischen einer durch alle Verbraucher, v, der jeweiligen Gruppe (Gi) aktuell verbrauchten elektrischen Gruppen-Strommenge,

IaktGi, der Gruppe (Gi) und einer für die Stromversorgung aller Verbraucher der jeweiligen Gruppe (Gi) zumindest erforderlichen Minimal-Gruppen-Strommenge, IminGi der Gruppe (Gi); und

Berechnen für jede eingeteilte Gruppe (Gi) ausgehend von der insgesamt erforderlichen Gesamtreduktions-Strommenge einer verbleibenden Reststrommenge, indem von der für die vorherige Gruppe (Gi+1) berechneten Reststrommenge die berechnete einsparbare Strommenge der jeweiligen Gruppe (Gi) subtrahiert wird.

Bei einer möglichen Ausführungsform des Verfahrens werden die Teilschritte zur Berechnung der Soll-Ströme (Isoll-v) der Verbraucher, v, solange wiederholt werden bis die berechnete verbleibende Rest-Strommenge, Iresti, größer null ist (Iresti >0) oder bis die Gruppe (G1) von Verbrauchern, v, mit der höchsten Priorität (G1) erreicht wird.

Bei einer möglichen Ausführungsform des Verfahrens wird nach der Berechnung der Sollströme (Isoll-v) der Verbraucher v für jede der eingeteilten Gruppen (Gi) von elektrischen Verbrauchern, v, des Teilnetzes (TN) beginnend mit der Gruppe (GN) von elektrischen Verbrauchern mit der niedrigsten Priorität (pN) bis hin zum Erreichen der Gruppe (G1) von elektrischen Verbrauchern v mit der höchsten Priorität (p1) die aktuell durch die Verbraucher, v, der jeweiligen Gruppe (Gi) verbrauchte Strommenge solange reduziert bis die für die jeweilige Gruppe (Gi) berechnete Gruppen-Sollstrommenge , Isoll Gi, erreicht wird.

Bei einer möglichen Ausführungsform des Verfahrens wird eine innerhalb des Teilnetzes (TN) demnächst auftretenden Überlast, automatisch erkannt, sobald eine aktuell verbrauchte Gesamtstrommenge, Iakt-gesamt, aller Verbraucher, v, aller Gruppen (G1-GN) des Teilnetzes (TN) eine vorgegebene maximal zulässige Strommenge, Imax-TN, des Teilnetzes (TN) übertrifft.

Bei einer möglichen Ausführungsform des Verfahrens werden die gemessenen aktuell verbrauchten elektrischen Strommengen, Iakt-v, aller Verbraucher, v, einer Gruppe (Gi) zu der Gruppen-Strommenge (I aktGi ) der Gruppe (Gi) aufsummiert.

Bei einer möglichen Ausführungsform des Verfahrens werden die aktuell verbrauchten elektrischen Gruppen-Strommengen (IaktGi) aller eingeteilten Gruppen (G1 bis GN) von Verbrauchern des Teilnetzes (TN) zur Berechnung der aktuell verbrauchten Gesamtstrommenge, Iakt-gesamt, des Teilnetzes (TN) aufsummiert.

Bei einer möglichen Ausführungsform des Verfahrens wird die erforderliche Gesamtreduktions-Strommenge, Ired-gesamt, mit welcher die durch alle Verbraucher, v, des Teilnetzes (TN) aktuell verbrauchte Gesamt-Strommenge, Iakt-gesamt, zur Vermeidung der Überlast in dem Teilnetz (TN) zu reduzieren ist, als Differenz zwischen der aktuell verbrauchten Gesamtstrommenge, Iakt-gesamt, aller Verbraucher, v, des Teilnetzes (TN) und der vorgegebenen maximal zulässigen Strommenge, Imax-TN, des Teilnetzes (TN) berechnet. Bei einer möglichen Ausführungsform des Verfahrens werden, falls die berechnete verbleibende Rest-Strommenge, Iresti, nach Erreichen der Gruppe (G1) von elektrischen Verbrauchern mit der höchsten Priorität (p1), größer als null ist (Irest1 >0) für jede der eingeteilten Gruppen (Gi) von elektrischen Verbrauchern des Teilnetzes (TN) beginnend mit der Gruppe (GN) von elektrischen Verbrauchern mit der niedrigsten Priorität (pN) die folgenden Schritte (S) ausgeführt werden:

Markieren der jeweiligen Gruppe (Gi) als eine abschaltbare Gruppe (Allow to Shut Down), Berechnen für jeden Verbraucher, v, der markierten Gruppe (Gi) einer einsparbaren Strommenge, Iv, die durch ein Abschalten (Shut Down) des betreffenden Verbrauchers, v, eingespart werden kann; und

Reduzieren der verbleibenden Reststrommenge, Iresti, um die durch Abschalten des Verbrauchers, v, einsparbare Strommenge, Iv;

wobei die obigen Schritte solange wiederholt werden bis die berechnete verbleibende Rest-Strommenge, Iresti, größer null ist (Iresti >0) oder die Gruppe (G1) von Verbrauchern, v, mit der höchsten Priorität (G1) erreicht wird.

Bei einer möglichen Ausführungsform des Verfahrens wird im Anschluss an die Berechnung der Sollströme (Isoll-v) der Verbraucher des Teilnetzes (TN) für jede Gruppe (Gi) die aktuell verbrauchte Strommenge, Iakt-v, eines jeden Verbrauchers, v, innerhalb der jeweiligen Gruppe (Gi) schrittweise in einem Round-Robin-Prozess solange um eine Stromverminderungsmenge (Delta-Iminus) physikalisch reduziert wird, bis die für die betreffende Gruppe (Gi) ermittelte Gruppen-Sollstrommenge ( IsollGi) erreicht wird.

Bei einer möglichen Ausführungsform des Verfahrens wird, falls eine Gruppe (Gi) von Verbrauchern, v, als eine abschaltbare Gruppe (Allow to Shut down) markiert worden ist, der Stromverbrauch eines Verbrauchers, v, innerhalb der markierten Gruppe (Gi) auf null reduziert, sobald der Stromverbrauch des Verbrauchers, v, eine für diesen Verbraucher, v, hinterlegte Minimalstrommenge, Imin-v, unterschreitet.

Bei einer möglichen Ausführungsform des Verfahrens wird, falls nach der Reduzierung des Stromverbrauchs der Verbraucher ,v, aller Gruppen des Teilnetzes (TN) keine Gefahr eines Auftretens einer Überlast in dem Teilnetz (TN) mehr besteht, der Stromverbrauch der Verbraucher, v, des Teilnetzes (TN) für jede der eingeteilten Gruppen (Gi) von elektrischen Verbrauchern ,v, des Teilnetzes (TN) beginnend mit der Gruppe (G1) von elektrischen Verbrauchern mit der höchsten Priorität (p1) bis hin zu der Gruppe (GN) mit der niedrigsten Priorität (pN) erhöht.

Dabei wird eine aktuell verbrauchte Strommenge, Iakt-v, eines jeden Verbrauchers, v, innerhalb der jeweiligen Gruppe (Gi) um eine Stromerhöhungsmenge (Delta-Iplus) in einem oder mehreren Erhöhungsschritten erhöht, sofern hierdurch keine zulässige Maximalstrommenge, Imax-v, des betreffenden Verbrauchers, v, überschritten wird.

Bei einer möglichen Ausführungsform des Verfahrens hängt eine Anzahl, ki, der vorgenommenen Erhöhungsschritte zur Erhöhung der aktuell verbrauchten Strommenge, Iakt-v, eines Verbrauchers, v, innerhalb einer Gruppe (Gi) von der Priorität (pi) der jeweiligen Gruppe (Gi) und der Anzahl, N, der eingeteilten Gruppen, G, ab (ki=N-pi).

Bei einer möglichen Ausführungsform des Verfahrens weisen die Verbraucher, v, des Teilnetzes (TN) regelbare und/oder abschaltbare Lasten und/oder an Ladepunkten des Teilnetzes (TN) anschließbare Lasten auf.

Bei einer möglichen Ausführungsform des Verfahrens weisen die Verbraucher, v, des Teilnetzes (TN) fest installierte Lasten, insbesondere Wärmepumpen oder Inverter, und anschließbaren Lasten, insbesondere an Ladepunkten des Teilnetzes (TN) anschließbare Fahrzeugbatterien, auf.

Bei einer möglichen Ausführungsform des Verfahrens wird eine Last beim Anschluss an einen Ladepunkt des Teilnetzes (TN) dynamisch in eine Gruppe (Gi) in Anhängigkeit mindestens eines bereitgestellten Einteilungskriteriums eingeteilt.

Bei einer möglichen Ausführungsform des Verfahrens hängt die Stromerhöhungsmenge und die Stromreduzierungsmenge vom Typ des Verbrauchers, v, ab.

Bei einer möglichen Ausführungsform des Verfahrens teilt zumindest ein Teil der elektrischen Verbraucher, v, eines Teilnetzes (TN) jeweils seine zugehörige erlaubte Stromerhöhungsmenge und/oder seine erlaubte Stromreduzierungsmenge, mit.

Die Erfindung schafft ferner ein elektrisches Teilnetz mit den im Patentanspruch 19 angegebenen Merkmalen.

Die Erfindung schafft demnach ein elektrisches Teilnetz, TN, insbesondere ein Lade-Netz, mit mehreren elektrischen Verbrauchern, v, und mit einer Steuerung zur Durchführung eines Verfahren zur Vermeidung eines Stromausfalls in dem Teilnetz, TN, das zur Stromversorgung von elektrischen Verbrauchern, v, des Teilnetzes (TN) an ein Übertragungsnetz (ÜN) angeschlossen ist, wobei die elektrischen Verbraucher, v, des Teilnetzes (TN) in eine Anzahl, N, verschiedener Gruppen (G1, G2,...Gi...GN) mit unterschiedlicher Prioritäten (p1,p2, ...pi...pN) eingeteilt sind, mit den Schritten:

Berechnen einer insgesamt erforderlichen Gesamtreduktions-Strommenge, Ired-gesamt, mit welcher die durch alle Verbraucher, v, des Teilnetzes (TN) aktuell verbrauchte elektrische Gesamt-Strommenge, Iakt-gesamt, zur Vermeidung einer erkannten Überlast in dem Teilnetz (TN) zu reduzieren ist;

Ermitteln einer Gruppen-Sollstrommenge (IsollGi ) für jede eingeteilte Gruppe (Gi) von Verbrauchern, v, auf Basis der insgesamt erforderlichen Gesamtreduktions-Strommenge, Ired-gesamt, und einer durch die jeweilige Gruppe (Gi) einsparbaren Strommenge (IsparGi); Berechnen von Sollströmen (Isoll-v) für die elektrischen Verbraucher, v, der eingeteilten Gruppen (G1, G2,...Gi...GN) des Teilnetzes (TN) in Abhängigkeit der ermittelten Gruppen-Sollstrommenge (IsollGi) und

Reduzieren der aktuell durch die Verbraucher, v, der jeweiligen Gruppe (Gi) verbrauchte Strommenge solange bis die für die jeweilige Gruppe (Gi) ermittelte Gruppen-Sollstrommenge (Isoll Gi) erreicht wird.

Mögliche Ausführungsformen des erfindungsmäßen Verfahrens und des erfindungsgemäßen Netzes werden unter Bezugnahme auf die Figuren näher beschrieben.

Es zeigen:

Fig. 1 ein Ablaufdiagramm einer möglichen Ausführungsform des erfindungsgemäßen Verfahrens;

Fig. 2 ein Beispiel eines Netzes mit zwei Teilnetzen zur Erläuterung des erfindungsgemäßen Verfahrens;

Fig. 3. ein Ablaufdiagramm zur Darstellung einer möglichen Implementierung von Schritten des erfindungsgemäßen Verfahrens;

Fig. 4. ein Ablaufdiagramm zur Darstellung einer möglichen Implementierung von weiteren Schritten des erfindungsgemäßen Verfahrens;

Fig. 5 bis 8 Signaldiagramme zur Erläuterung des erfindungsgemäßen Verfahrens.

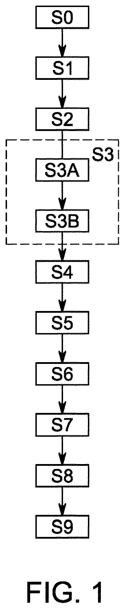

Die Erfindung schafft gemäß einem ersten Aspekt ein Verfahren zur Vermeidung eines Stromausfalls in mindestens einem elektrischen Teilnetz (TN). Ein Ausführungsbeispiel des Verfahrens ist als Ablaufdiagramm schematisch in Fig.1 dargestellt.

Ein Teilnetz TN ist zur Stromversorgung von elektrischen Verbrauchern, v, des Teilnetzes (TN) an ein Übertragungsnetz (ÜN) angeschlossen. Das Teilnetz TN kann beispielsweise ein Haus-Netz sein. Weiterhin kann es sich bei dem Teilnetz TN auch um ein Netz einer industriellen Anlage handeln. Die Verbraucher v umfassen sowohl DC-Verbraucher als auch AC-Verbraucher.

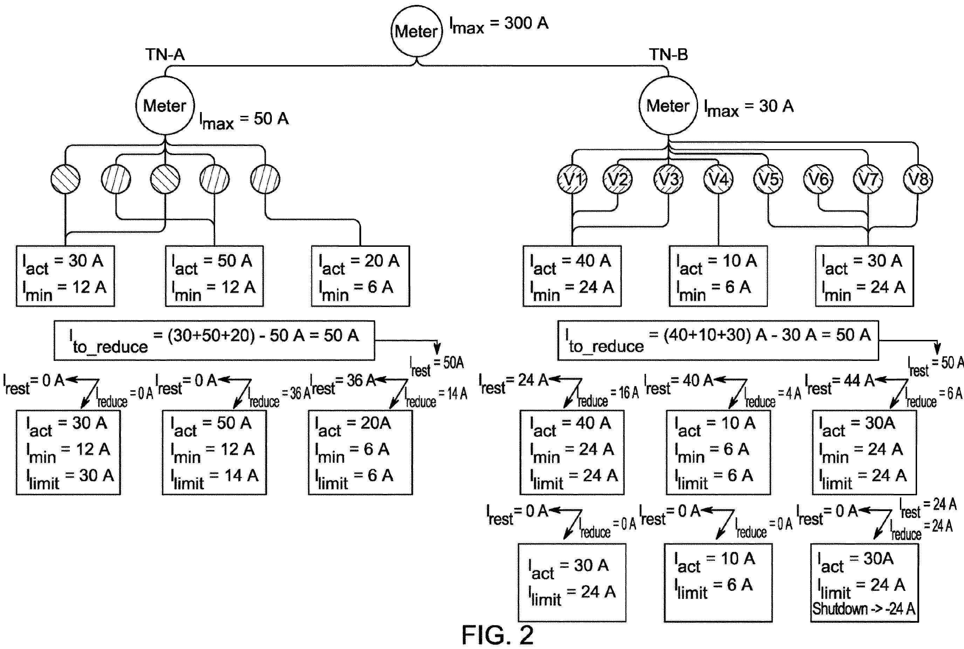

Fig. 2 zeigt ein einfaches Beispiel mit zwei Teilnetzen TNA, TNB die jeweils über einen Stromzähler an ein Versorgungsnetz angeschlossen sind. Jedes Teilnetz TN hat eine zulässige maximale erlaubte Stromstärke Imax-TN.

In dem dargestellten Beispiel hat das erste Teilnetz TN-A eine maximal erlaubte Stromstärke Imax-TNA = 50 Amp und das zweite Teilnetz TN-B eine maximal erlaubte Stromstärke Imax-TNB = 30 Amp.

Das Teilnetz TN-A hat in dem dargestellten Beispiel von Fig.2 fünf Verbraucher v1A bis v5A. Das andere Teilnetz TN-B besitzt in dem dargestellten Beispiel acht weitere Verbraucher v1B bis v8B.

Die elektrischen Verbraucher, v, des jeweiligen Teilnetzes TN werden zunächst in eine Anzahl, N, verschiedener Gruppen (G1, G2,...Gi...GN) mit unterschiedlicher Prioritäten (p1,p2, ...pi...pN) eingeteilt. Die Anzahl N der eingeteilten Gruppen G kann je nach Anwendungsfall variieren. Beispielsweise wird das erste Teilnetz TN-A und das zweite Teilnetz TN-B jeweils in drei Gruppen G1, G2, G3 mit unterschiedlichen Prioritäten p1,p2,p3 eingeteilt, wie in Fig. 2 dargestellt In Teilnetz TN-A bilden die Verbraucher v1A,v3A die Gruppe G1A mit der höchsten Priorität P1,die Verbraucher v2A,v4A die Gruppe G2A mit der zeithöchsten Priorität p2 und der Verbraucher vA5 die Gruppe G3A mit der niedrigsten Priorität P3.In Teilnetz TN-B bilden die Verbraucher v1B,v2B,v3B die Gruppe G1B mit der höchsten Priorität p1, der Verbraucher v4B die Gruppe G2B mit der nächst höheren Priorität p2 und die Verbraucher v5B,v6B,v7B,v8B die Gruppe G3B mit der niedrigsten Priorität p1.

Die Einteilung der Gruppen G kann nach einem vorgegebenen oder selektierbaren Einteilungskriterium EK erfolgen. Ein mögliches Einteilungskriterium EK ist der Typ der Verbraucher v und/oder deren Bedeutung für den Betrieb einer Anlage. Ein weiteres Einteilungskriterium EK ist beispielsweise der Betreiber oder Nutzer desjeweiligen Verbrauchers v. Verbraucher v oder Ladepunkte von Personen bestimmter Abteilungen innerhalb eines Unternehmens, beispielsweise Außendienstmitarbeiter, erhalten eine höhere Priorität p als Verbraucher v oder Ladepunkte von anderen Personen bzw. Nutzern innerhalb eines Unternehmens. Dabei kann der erwartete Leistungsverbrauch der Person berücksichtigt werden. Beispielsweise benötigen Fahrzeuge von Außendienstmitarbeitern in der Regel mehr elektrische Leistung als Fahrzeuge von Innendienstmitarbeiter. Das zu Grunde gelegte Einteilungskriterium EK und somit die Gruppeneinteilung der Verbraucher v kann somit zeitlich bzw. dynamisch variieren. Das Einteilungskriterium EK kann auch ein Strompreis pro kWh sein, den ein Nutzer gewillt ist, für das Laden oder die Stromversorgung seines Verbrauchers v zu entrichten. Das Einteilungskriterium EK kann auch durch eine logische Verknüpfung von anderen Einteilungskriterien ermittelt werden. Anhand des angewandten Einteilungskriterium EK wird für jeden Verbraucher v eine Priorität p des Verbrauchers v bestimmt.

Für jede einteilte Gruppe Gi von Verbrauchern v wird deren aktuell verbrauchter Strom IaktGi berechnet und der minimal zulässige Strom IminGi der Gruppe Gi ermittelt, wie in dem Beispiel gemäß Fig.2 dargestellt. Der aktuell verbrauchte Strom Iakt G1 der Gruppe G1B mit der niedrigsten Priorität p1 innerhalb des Teilnetzes TN-B beträgt beispielsweise 30Amp. Der minimal zulässige Strom dieser Gruppe G1B beträgt beispielsweise 24 Amp-Der insgesamt innerhalb eines Teilnetzes TN verbrauchte Strom Iakt-gesamt ergibt sich als Summe der aktuell verbrauchten Ströme aller Gruppen G von Verbrauchern v innerhalb des Teilnetzes TN.

Bei einer möglichen Ausführungsform des Verfahrens wird in einem Schritt S0 eine innerhalb des Teilnetzes (TN) demnächst auftretenden drohende Überlast, automatisch erkannt, sobald eine aktuell verbrauchte Gesamtstrommenge, Iakt-gesamt, aller Verbraucher, v, aller Gruppen (G1-GN) des Teilnetzes (TN) eine vorgegebene maximal zulässige Strommenge, Imax-TN, des Teilnetzes (TN) bzw. einen vordefinierten Schwellenwert überschreitet. Iakt-gesamt > Imax-TN.

Die erforderliche Gesamtreduktions-Strommenge, Ired-gesamt, mit welcher die ermittelte bzw. überwachte durch alle Verbraucher, v, des Teilnetzes (TN) aktuell verbrauchte Gesamt-Strommenge, Iakt-gesamt, zur Vermeidung der drohenden Überlast in dem Teilnetz (TN) zu reduzieren ist, kann als Differenz zwischen der ermittelten aktuell verbrauchten Gesamtstrommenge, Iakt-gesamt, aller Verbraucher, v, des Teilnetzes (TN) und einer vorgegebenen maximal zulässigen Strommenge, Imax-TN, des Teilnetzes (TN) berechnet werden:

$$\text{Ired-gesamt} = \text{Iakt-gesamt} - \text{Imax-TN}$$

In dem in Fig.2 dargestellten Beispiel beträgt der insgesamt verbrauchte aktuelle Strom Iakt-gesamt aller Verbraucher v innerhalb des Teilnetzes TN-B :
Iakt-gesamt-TN-B = 40 Amp (Gruppe G3B) plus 10 Amp (Gruppe G2B) plus 30 Amp (Gruppe G1B) = 80 Amp

In dem dargestellten Beispiel von Fig.2 beträgt die maximal zulässige Strommenge Imax-TN-B 30 Amp.

Der zu reduzierende Stromüberschuss Ired-gesamt TN-B innerhalb des Teilnetzes TN-B beträgt demnach 80 Amp (Iakt-gesamt-TN-B) minus 30 Amp (Imax-TN-B).
Ired-gesamt-TN-B = 80Amp -30Amp. = 50 Amp

Die aktuell verbrauchte Gesamtstrommenge Iakt-gesamt eines Teilnetzes TN kann fortlaufend überwacht werden, beispielsweise durch periodische Messung der durch alle Verbraucher, v, des Teilnetzes TN jeweils momentan verbrauchten Strommenge und anschließender Aggregation der gemessenen Verbraucher-Strommengen I des Teilnetzes. TN zu der aktuell verbrauchten Gesamtstrommenge, Iakt-gesamt, des Teilnetzes TN. Die maximal zulässige Strommenge Imax-TN eines Teilnetzes TN ist vorgegeben und hängt von den verschalteten Komponenten, insbesondere den dort verschalteten Stromleitungen und Überstromschutzeinrichtungen ab.

Die aktuell bzw. momentan verbrauchte-Gesamt-Strommenge Iakt-gesamt, aller Verbraucher v des Teilnetzes TN wird vorzugsweise durch Aufsummieren gemessener oder gemeldeter Verbrauchsströme aller Verbraucher, v, des Teilnetzes TN ermittelt.

Bei einer möglichen Implementierung werden zunächst die durch Messeinheiten gemessenen und der Steuereinheit des Teilnetzes TN gemeldeten aktuell verbrauchten elektrischen Strommengen, Iakt-v, aller Verbraucher, v, einer Gruppe (Gi) zu der aktuell verbrauchten Gruppen-Strommenge (IaktGi ) der betreffenden Gruppe (Gi) aufsummiert. Anschließend können die aktuell verbrauchten elektrischen Gruppen-Strommengen (IaktGi) aller eingeteilten Gruppen (G1 bis GN) von Verbrauchern des Teilnetzes (TN) ihrerseits zur Berechnung der aktuell verbrauchten Gesamtstrommenge, Iakt-gesamt, des gesamten Teilnetzes (TN) aufsummiert werden. Diese aktuell verbrauchte Gesamtstrommenge, Iakt-gesamt, des Teilnetzes TN wird zur Erkennung einer drohenden Überlast in dem Teilnetz TN im Schritt S0 vorzugsweise fortlaufend überwacht. Die Einteilung der Verbraucher in Gruppen Gi, nach einem vorgegebenen oder selektierbaren Einteilungskriterium EK, erfolgt im Schritt SGi.

Zur Vermeidung eines drohenden Stromausfalls in dem betroffenen Teilnetz TN wird in einem ersten Schritt S1 des erfindungsgemäßen Verfahrens zunächst eine Berechnung einer insgesamt erforderlichen Gesamtreduktions-Strommenge, Ired-gesamt, ausgeführt. Diese insgesamt erforderliche Gesamtreduktions-Strommenge, Ired-gesamt, ist die Strommenge mit welcher die durch alle Verbraucher, v, des Teilnetzes (TN) aktuell verbrauchte elektrische Gesamt-Strommenge, Iakt-gesamt, zu reduzieren ist, um die in Schritt S0 erkannte drohende Überlast in dem betroffenen Teilnetz (TN) zu vermeiden.

Anschließend wird in einem Schritt S2 des erfindungsgemäßen Verfahrens eine Gruppen-Sollstrommenge (IsollGi ) für jede der eingeteilten Gruppen (Gi) von Verbrauchern, v, auf Basis der im Schritt S1 berechneten insgesamt erforderlichen Gesamtreduktions-Strommenge, Ired-gesamt, und auf Basis einer durch die Gruppen (Gi) jeweils einsparbaren Strommenge (Ispari) ermittelt.

Im Schritt SR1 startet die erste Runde (RU1), beginnend mit Gruppe (GN) mit der niedrigsten Priorität (pN).

In einem weiteren Schritt S3 des erfindungsgemäßen Verfahrens werden jeweils Sollströme (Isoll-v) für die unterschiedlichen elektrischen Verbraucher, v, der verschiedenen eingeteilten Gruppen (G1, G2,...Gi...GN) des Teilnetzes (TN) in Abhängigkeit der in Schritt S2 für die Gruppen Gi jeweils ermittelten Gruppen-Sollstrommenge (IsollGi) berechnet. Dabei können die Sollströme (Isoll-v) von Verbrauchern, v, innerhalb einer eingeteilten Gruppe (Gi) aus der in Schritt S2 ermittelten Gruppen-Sollstrommenge (IsollGi) der jeweiligen Gruppe (Gi) abgeleitet werden.

Bei einer möglichen Ausführungsform des Verfahrens werden im Schritt S3 zur Berechnung der Sollströme (Isoll-v) für die elektrischen Verbraucher, v, der eingeteilten Gruppen (G1, G2,...Gi...GN) des Teilnetzes (TN) für jede der eingeteilten Gruppen (Gi) von elektrischen Verbrauchern, v, des Teilnetzes (TN) beginnend mit der Gruppe (GN) von elektrischen Verbrauchern mit der niedrigsten Priorität (pN) die folgenden beiden Teilschritte S3A, S3B ausgeführt.

In einem ersten Teilschritt S3A wird die durch jede eingeteilte Gruppe (Gi) an Verbrauchern, v, jeweils einsparbare Strommenge (IsparGi) als Differenz zwischen einer durch alle Verbraucher, v, der jeweiligen Gruppe (Gi) aktuell verbrauchten elektrischen Gruppen-Strommenge, IaktGi, der Gruppe (Gi) und einer für die Stromversorgung aller Verbraucher, v, der jeweiligen Gruppe (Gi) zumindest erforderlichen Minimal-Gruppen-Strommenge, IminGi der Gruppe (Gi) berechnet:

$$IsparGi = IaktGi - IminGi$$

Beispielsweise umfasst die Gruppe G3B mit der niedrigsten Priorität p3 innerhalb des Teilnetzes TN-B die Verbraucher v5B bis v8B. Diese haben eine Minimal-Gruppenstrommenge IminG3B von zusammen 24 Amp. Die aktuell verbrauchte Strommenge der Gruppe G3B IaktG3B beträgt demgegenüber 30Amp.

Somit beträgt die einsparbare Strommenge Ispar G3B der Gruppe G3B der niedrigsten Priorität p3 innerhalb des Teilnetzes TN-B:

$$IsparG3B = IaktG3B - IminG3B = 30 Amp - 24 Amp = 6 Amp$$

In einem zweiten Teilschritt S3B wird für jede eingeteilte Gruppe (Gi) ausgehend von der im Schritt S1 berechneten insgesamt erforderlichen Gesamtreduktions-Strommenge, (Ired-gesamt = IrestN+1), eine verbleibenden Reststrommenge Iresti berechnet, indem von der für die vorherige Gruppe (Gi+1) berechneten Reststrommenge (Irest i+1) die im Schritt S3A berechnete einsparbare Strommenge (IsparGi) der jeweiligen Gruppe (Gi) subtrahiert wird.

$$Irest\ i = Irest\ i+1 - IsparGi$$

Bei dem in Fig.2 dargestellten Beispiel beträgt die insgesamt erforderlichen Gesamtreduktions-Strommenge, (Ired-gesamt= Iirest0) für das Teilnetz TN-B 50 Amp. Davon wird die durch die Gruppe G3B mit der niedrigsten Priorität p3 einsparbare Strommenge IsparG3B =6Amp zur Berechnung einer Reststrommenge Irest0 abgezogen.

Die berechnete verbleibende Reststrommenge Irest1 ist somit 50 Amp minus 6Amp gleich 44 Amp.

$$\text{Irest1}= \text{Irest0} (=50\text{Amp})-\text{IpsarG3B} (=6\ \text{Amp})= 44\ \text{Amp}$$

Bei einer möglichen Ausführungsform des Verfahrens wird der Teilschritt S3A in der ersten Runde (RU1) zur Berechnung der Soll-Ströme (Isoll-v) der Verbraucher, v, in einer ersten Runde (RU 1) solange wiederholt bis die berechnete verbleibende Rest-Strommenge, Iresti, kleiner gleich null wird (Iresti <= 0) oder bis die Gruppe (G1) von Verbrauchern, v, mit der höchsten Priorität (G1) berücksichtigt worden wird.

In dem dargestellten Beispiel von Fig.2 beträgt die für das Teilnetz TN-B berechnete Reststrommenge Irest3 nach Berücksichtigung der Gruppe G1B mit der höchsten Priorität p1 noch 24 Amp, d.h. die in der ersten Runde (RU 1) durchgeführte rechnerische Reduktion der verbrauchten Strommenge ist noch nicht ausreichend. Daher wird in weiteren Schritten vorzugsweise geprüft, ob die noch fehlende Stromreduzierungsmenge von 24 Amp durch Abwurf von Verbrauchern v des Teilnetzes TN-B in einer zweiten Runde (RU 2) erreicht werden kann.

In dem dargestellten Beispiel von Fig.2 beträgt bereits die für das andere Teilnetz TN-A berechnete Reststrommenge Irest2 nach Berücksichtigung der Gruppe G2A mir der zweithöchsten Priorität p2 nach der ersten Runde null Amp, d.h. die berechnete erzielbare Stromreduzierungsmenge ist bereits nach der ersten Runde (RU 1) ausreichend und ein Abwurf von Verbrauchern v im Teilnetz TN-A kann vermieden werden.

In einem Schritt S4 des erfindungsgemäßen Verfahrens wird die aktuell durch die Verbraucher, v, der jeweiligen Gruppe (Gi) verbrauchte Strommenge solange reduziert bis die für die jeweilige Gruppe (Gi) im Schritt S2 ermittelte Gruppen-Sollstrommenge (Isoll Gi) erreicht wird. Die Reduzierung der Strommenge in Schritt S4 kann zunächst rechnerisch, d.h. noch nicht physikalisch erfolgen.

Nach der in den beiden Teilschritten S3A,S3B des Schrittes S3 erfolgten Berechnung der Sollströme (Isoll-v) der Verbraucher v für jede der eingeteilten Gruppen (Gi) von elektrischen Verbrauchern, v, des Teilnetzes (TN) wird in dem Schritt S4 beginnend mit der Gruppe (GN) von elektrischen Verbrauchern ,v, mit der niedrigsten Priorität (pN) bis hin zum Erreichen der Gruppe (G1) von elektrischen Verbrauchern ,v, mit der höchsten Priorität (p1) die aktuell durch die Verbraucher, v, der jeweiligen Gruppe (Gi) verbrauchte Strommenge IaktGi solange rechnerisch reduziert bis die für die jeweilige Gruppe (Gi) im Schritt S2 berechnete Gruppen-Sollstrommenge , Isoll Gi, erreicht wird.

Bei einer möglichen Ausführungsform des Verfahrens werden, falls die berechnete verbleibende Rest-Strommenge, Iresti, nach Berücksichtigung der Gruppe (G1) von elektrischen Verbrauchern mit der höchsten Priorität (p1), immer noch größer als null ist (Irest1 >0) , beispielsweise 24 Amp für Teilnetz TN-B in Fig.2, für jede der eingeteilten Gruppen (Gi) von elektrischen Verbrauchern des Teilnetzes (TN) beginnend mit der Gruppe (GN=G3B)) von elektrischen Verbrauchern v mit der niedrigsten Priorität (pN=p3) in einer zweiten Runde (RU 2) die folgenden weiteren Schritte (S5, S6, S7) ausgeführt, wobei der Schritt SR2 den Start der zweiten Runde (RU 2), beginnend mit Gruppe (GN) mit der niedrigsten Priorität (pN), einleitet:

Markieren im Schritt S5 der jeweiligen Gruppe (Gi) als eine abschaltbare Gruppe (Allow to Shut Down),
Berechnen im Schritt S6 für jeden Verbraucher, v, der markierten Gruppe (Gi) einer einsparbaren Strommenge, Isparv, die durch ein Abschalten (ShutDown) des betreffenden Verbrauchers, v, eingespart werden kann; und
Reduzieren (rechnerisch) im Schritt S7 der verbleibenden Reststrommenge, Iresti, um die durch Abschalten des Verbrauchers, v, jeweils einsparbare Strommenge, Ispar-v. Beispielsweise wird durch rechnerisches Abschalten der Verbraucher v5B bis v8B der Gruppe G3B mit der niedrigsten Priorität p3 innerhalb des Teilnetzes TN-B in Runde 2 eine verbleibende Rest-Strommenge von null Amp erreicht, wie in Fig.2 dargestellt.

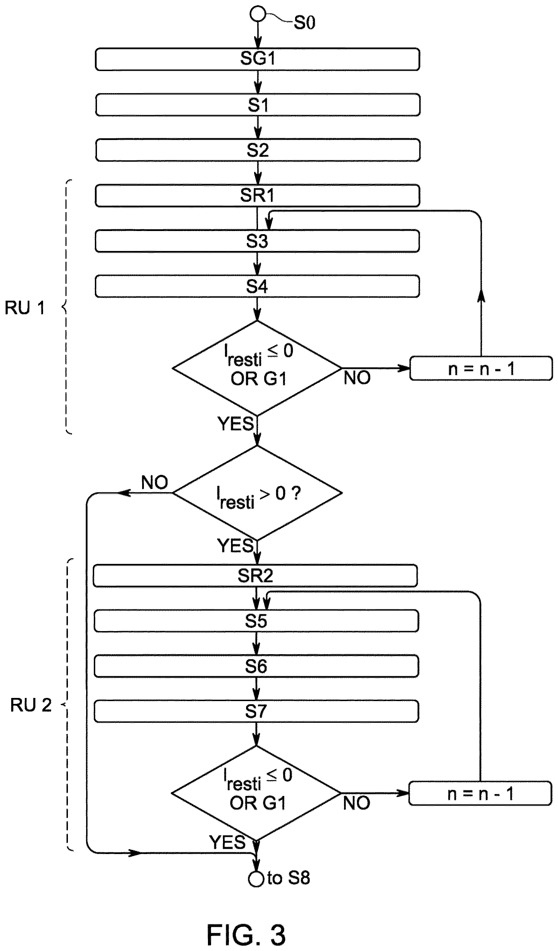

Die obigen Schritte S5, S6, S7 der zweiten Runde (RU 2) werden solange wiederholt bis die berechnete verbleibende Rest-Strommenge, Iresti, kleiner gleich null ist (Iresti <=0) oder die Gruppe (G1) von Verbrauchern, v, mit der höchsten Priorität (p1) berücksichtigt worden ist. Fig.3 zeigt ein Ablaufdiagramm einer möglichen Implementierung der Schritte S1 bis S7 mit dem beiden Berechnungsrunden (RU1, RU 2) zur Berechnung der Einstellströme bzw. Sollströme Isollv für die Verbraucher v eines Teilnetzes TN.

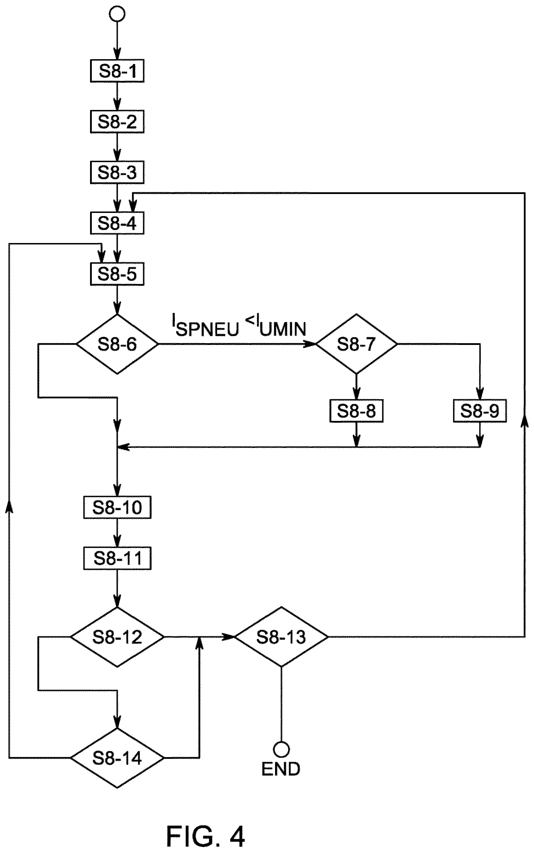

Bei einer möglichen Ausführungsform des Verfahrens wird im Anschluss an die Berechnung der Sollströme Isoll-v der Verbraucher v des Teilnetzes (TN) in den Schritten S1 bis S7 in einem weiteren Schritt S8 für jede Gruppe (Gi) die aktuell verbrauchte bzw. bereitgestellte Strommenge, Iakt-v, eines jeden Verbrauchers, v, innerhalb der jeweiligen Gruppe (Gi) schrittweise in einem Round-Robin-Prozess solange um eine Stromverminderungsmenge (Delta-Iminus) physikalisch bzw. tatsächlich reduziert, bis die für die betreffende Gruppe (Gi) ermittelte Gruppen-Sollstrommenge ( IsollGi) erreicht wird, wie in Fig.4 dargestellt.

Fig.4 zeigt ein Ablaufdiagramm einer möglichen Implementierung der physikalischen Einstellung der Verbraucher v eines Teilnetzes TN im Schritt S8 entsprechend der im Ablauf gemäß Fig.3 berechneten Sollströme Isollv der Verbraucher v des Teilnetzes TN. Nach der Einteilung der Verbraucher v in Gruppen Gi im Schritt S8-1 wird mit der Gruppe GN mit der niedrigsten Priorität PN in Schritt S8-2 gestartet. Hierzu wird im Schritt S8-3 zunächst die Verbraucher Strom-Sollpunkt-Gruppe initialisiert und im Schritt S8-4 mit einem beliebigen Verbraucher v in der Gruppe G gestartet. Im Schritt S8-5 erfolgt für den Verbraucher v die Berechnung eines neuen Sollpunktes ISP-neu. Dann wird im Schritt S8-6 geprüft, ob der im Schritt S8-5 berechnete neue Sollpunkt ISPneu geringer ist als der zulässige minimale Strom Ivmin des Verbrauchers v. Ist dies der Fall wird in einem weiteren Schritt S8-7 geprüft, ob die Gruppe G als abschaltbar markiert ist oder nicht. Falls die Gruppe G als nicht abschaltbar markiert ist, wird der neue Sollpunkt ISP-neu im Schritt S8-8 auf den minimalen Strom Ivmin eingestellt (ISPneu := Ivmin). Falls umgekehrt die Gruppe G als abschaltbar markiert ist, wird der neue Sollpunkt ISP neu im Schritt S8-9 auf null eingestellt (ISPneu := 0). Anschließend wird im Schritt S8-10 die Summe des reduzierten Stromes in der Gruppe G ermittelt. Im Schritt S8-11 wird der neue Sollpunkt ISPneu an den betreffenden Verbraucher v zur physikalischen Einstellung gesendet.

In dem nächsten Schritt S8-12 wird geprüft, ob der reduzierte Strom größer ist als der zu reduzierende Strom (IsollGi). Falls dies der Fall ist wird im Schritt S8-13 geprüft, ob noch weitere Gruppen G in dem Teilnetz TN vorhanden sind. Falls noch weitere Gruppen vorhanden sind, geht man in der Schleife zurück zu Schritt S8-4, wie in Fig.4 dargestellt. Falls jedoch keine weiteren Gruppen G vorhanden sind endet der Prozess. Falls die Prüfung in Schritt S8-12 ergibt, dass der reduzierte Strom nicht größer ist als der zu reduzierende Strom (IsollGi) wird im Schritt S8-14 geprüft, ob es keine weiteren Verbraucher v in der betreffenden Gruppe G gibt. Falls es keine weiteren Verbraucher v in der Gruppe G mehr gibt gelangt man zu Schritt S8-13. Falls jedoch noch weitere Verbraucher v in der Gruppe G vorhanden sind geht man in einer Schleife zurück zu Schritt S8-5, wie in Fig.4 dargestellt. Dies erfolgt so lange bis der für diese Gruppe G zu reduzierende Strom (IsollGi) erreicht wird.

Bei einer möglichen Ausführungsform des Verfahrens wird, falls eine Gruppe (Gi) von Verbrauchern, v, im Schritt S5 als eine abschaltbare Gruppe (Allow to Shutdown) markiert worden ist, der Stromverbrauch Ispneu eines Verbrauchers, v, innerhalb der markierten Gruppe (Gi) auf null reduziert (Ispneu=0), sobald der Stromverbrauch des Verbrauchers, v, eine für diesen Verbraucher, v, hinterlegte Minimalstrommenge, Imin-v, unterschreitet (Ispneu < Ivmin).

Bei einer möglichen Ausführungsform des Verfahrens wird, falls nach der physikalischen Reduzierung des Stromverbrauchs der Verbraucher ,v, aller Gruppen G des Teilnetzes (TN) im Schritt S8 keine Gefahr eines Auftretens einer Überlast in dem Teilnetz (TN) mehr besteht, der Stromverbrauch der Verbraucher, v, des Teilnetzes (TN) für jede der eingeteilten Gruppen (Gi) von elektrischen Verbrauchern ,v, des Teilnetzes (TN) beginnend mit der Gruppe (G1) von elektrischen Verbrauchern v mit der höchsten Priorität (p1) bis hin zu der Gruppe (GN) mit der niedrigsten Priorität (pN) in einem Schritt S9 wieder erhöht.

Hierzu wird im Schritt S9 eine aktuell verbrauchte Strommenge, Iakt-v, eines jeden Verbrauchers, v, innerhalb der jeweiligen Gruppe (Gi) um eine Stromerhöhungsmenge (Delta-Iplus) in einem oder mehreren Erhöhungsschritten erhöht, sofern hierdurch keine zulässige Maximalstrommenge, Imax-v, des betreffenden Verbrauchers, v, überschritten wird.

Die Anzahl, ki, der vorgenommenen Erhöhungsschritte zur Erhöhung der aktuell verbrauchten Strommenge, Iakt-v, eines Verbrauchers, v, innerhalb einer Gruppe (Gi) im Schritt S9 hängt von der Priorität (pi) der jeweiligen Gruppe (Gi) und der Anzahl, N, der eingeteilten Gruppen, G, ab:

$$ki = N - pi$$

Bei einer möglichen Ausführungsform des Verfahrens weisen die Verbraucher, v, des Teilnetzes (TN) regelbare und/oder abschaltbare Lasten auf. Die Verbraucher, v, des Teilnetzes (TN) können fest installierte Lasten, insbesondere Wärmepumpen oder Inverter, und anschließbare Lasten, insbesondere an Ladepunkten des Teilnetzes (TN) anschließbare Fahrzeugbatterien, aufweisen.

Das Teilnetz TN ist in einer möglichen Ausführungsform ein Lade-Netz mit Ladepunkten bzw. Ladesäulen zum Laden daran anschließbarer Elektrofahrzeuge als Verbraucher v. Dieses Teilnetz TN kann beispielsweise an einem Firmenparkplatz eines Unternehmens zum Aufladen von Fahrzeugen der Mitarbeiter vorgesehen sein. Die Elektrofahrzeuge verfügen in der Regel über keine drahtlose Kommunikationsmöglichkeit mit der Steuerung des Teilnetzes TN. Die E-Fahrzeuge kommunizieren normalerweise ausschließlich über ein Ladekabel mit der Ladestation (Wallbox). Diese Ladestation verfügt über eine drahtgebundene und/oder drahtlose Kommunikationsschnittstelle mit der Steuerung des Teilnetzes TN. Bei einer alternativen Implementierung verfügen die die Elektrofahrzeuge jeweils über eine eigene Steuereinheit, die über eine drahtlose Schnittstelle direkt mit der Steuerung des Teilnetzes TN kommunizieren kann. Beispielsweise meldet die Steuereinheit des Elektrofahrzeugs den momentanen Ladezustand SoC seiner Fahrzeugbatterie direkt oder indirekt über die Ladestation an die Steuerung des Teilnetzes TN. Ein mögliches Einteilungskriterium EK zur Einteilung der aufzuladenden Verbraucher bzw. Fahrzeugbatterien ist dabei der Ladezustand SoC. Beispielsweise erhält eine Elektrofahrzeugbatterie eines hochrangigen Mitarbeiters (EK1) des Unternehmens eine hohe Priorität p wenn der Ladezustand SoC der Elektrofahrzeugbatterie unter einem definierten Schwellenwert liegt (EK2).

Die Priorität p zum Laden eines Verbrauchers v kann sich somit im Zeitverlauf ändern. Die Gruppeneinteilung der Verbraucher v kann beispielsweise periodisch erneuert werden. Wird ein Verbraucher v z.B. während des Ladevorganges in eine Gruppe G mit niedrigerer Priorität p eingeteilt kann sich der Ladevorgang verlängern. Die zusätzlich benötigte Ladezeit wird dem Nutzer des betroffenen Elektrofahrzeuges vorzugsweise durch die Steuerung des Teilnetzes TN über die drahtlose Schnittstelle mitgeteilt, beispielsweise auf einer Anzeige des Fahrzeugs oder auf einer Anzeige des Mobiltelefons des Nutzers.

Bei einer möglichen Ausführungsform des Verfahrens wird eine Last beim Anschluss an einen Ladepunkt des Teilnetzes (TN) dynamisch in eine Gruppe (Gi) in Anhängigkeit mindestens eines bereitgestellten Einteilungskriteriums eingeteilt.

Bei einer möglichen Ausführungsform des Verfahrens hängt die im Schritt S9 verwendete Stromerhöhungsmenge (Delta-Iplus) und die im Schritt S8 verwendete Stromreduzierungsmenge (Delta-Iminus) vom Typ des Verbrauchers, v, ab. Zumindest ein Teil der elektrischen Verbraucher, v, eines Teilnetzes (TN) kann jeweils seine zugehörige erlaubte Stromerhöhungsmenge (Delta-Iplus) und/oder seine erlaubte Stromreduzierungsmenge (Delta-Iminus) der Steuerung des Teilnetzes TN bzw. einem Server melden bzw. mitteilen, beispielsweise über eine drahtlose Schnittstelle.

Das erfindungsgemäße Verfahren kann auf einem Prozessor eines lokalen Controllers bzw. einer lokalen Steuereinheit eines Teilnetzes TN ausgeführt werden. Alternativ kann das Verfahren auch auf einem Server einer Cloud ausgeführt werden. Die Ausführung des Verfahrens erfolgt vorzugsweise in Echtzeit.

Die Erfindung schafft gemäß einem weiteren Aspekt ein elektrisches Teilnetz, TN, mit mehreren elektrischen Verbrauchern, v, und mit einer Steuerung zur Durchführung eines Verfahren zur Vermeidung eines Stromausfalls in dem Teilnetz TN. Das Teilnetz TN dient zur Stromversorgung oder zum Aufladen von mehreren elektrischen Verbrauchern v.

Das Teilnetz TN ist an einem Übergabepunkt an ein Übertragungsnetz (ÜN), beispielsweise an ein öffentliches Stromversorgungsnetz, angeschlossen. Mehrere Teilnetze TN können an ein gemeinsames Übertragungsnetz ÜN angeschlossen sein.

Die verschiedenen elektrischen Verbraucher, v, des Teilnetzes (TN) sind in eine Anzahl, N, verschiedener Gruppen (G1, G2,...Gi...GN) mit unterschiedlicher Prioritäten (p1,p2, ...pi...pN) eingeteilt .Die Einteilung kann automatisch oder manuell erfolgen. Die lokale Steuerung des Teilnetzes TN kann mehrere Berechnungseinheiten aufweisen.:

Eine erste Berechnungseinheit der Steuereinheit ist zur Berechnung einer insgesamt erforderlichen Gesamtreduktions-Strommenge, Ired-gesamt, mit welcher die durch alle Verbraucher, v, des Teilnetzes (TN) aktuell verbrauchte elektrische Gesamt-Strommenge, Iakt-gesamt, zur Vermeidung einer erkannten Überlast in dem Teilnetz (TN) zu reduzieren vorgesehen

Eine zweite Berechnungseinheit der Steuereinheit ist zur Ermittlung einer Gruppen-Sollstrommenge (IsollGi ) für jede eingeteilte Gruppe (Gi) von Verbrauchern, v, auf Basis der insgesamt erforderlichen Gesamtreduktions-Strommenge, Ired-gesamt, und einer durch die jeweilige Gruppe (Gi) einsparbaren Strommenge vorgesehen.

Eine dritte Berechnungseinheit der Steuereinheit ist zur Berechnung von Sollströmen (Isoll-v) für die elektrischen Verbraucher, v, der eingeteilten Gruppen (G1, G2,...Gi...GN) des Teilnetzes (TN) in Abhängigkeit der ermittelten Gruppen-Sollstrommenge (IsollGi) vorgesehen.

Eine vierte Berechnungseinheit der Steuereinheit ist zur Reduzierung der aktuell durch die Verbraucher, v, der jeweiligen Gruppe (Gi) verbrauchten Strommenge vorgesehen. Die Reduzierung kann rechnerisch solange erfolgen bis die für die jeweilige Gruppe (Gi) ermittelte Gruppen-Sollstrommenge (Isoll Gi) erreicht wird.

Die verschiedenen Berechnungseinheiten sind vorzugsweise in einem Prozessor der Steuerung oder in einem Server integriert bzw. implementiert.

Das Verfahren kann als Programm bzw. als Applikation implementiert werden. Dabei kann die Gruppeneinteilung der Verbraucher v des Teilnetzes TN automatisch oder semi-automatisch bzw. interaktiv durch einen Nutzer bzw. Betreiber des Teilnetzes TN beispielsweise mit Hilfe einer Nutzerschnittstelle GUI an einem Rechner des Teilnetzes TN erfolgen. Dem Nutzer können auch selektierbare Einteilungskriterien EK angezeigt werden. Die eingeteilten Gruppen Gi mit ihren Verbrauchern v und zugehörigen Personen bzw. Fahrern sowie Stromparametern (z.B. SoC) können dem Nutzer bzw. Betreiber des Teilnetzes TN ebenfalls in Echtzeit angezeigt werden, beispielsweise schematisch wie in Fig.2 dargestellt.

Das erfindungsgemäße Verfahren und die entsprechende Steuerungsvorrichtung verhindern somit auf intelligente Weise ungewollte Abschaltungen bzw. Black-Outs von Teilnetzen TN, indem sie den Stromverbrauch von steuerbare Lasten und Verbrauchern v des Teilnetzes TN aktiv beeinflussen. Das Verfahren ermöglicht die Stromaufnahme von Verbrauchern v derart zu regeln, dass es in einem definierten Teilnetz TN zu keiner Überlastung und somit zu keiner ungewollten Abschaltung (Black-Outs) eines Teilnetzes TN kommt. Das Verfahren erlaubt es die Eigenschaften der jeweiligen Verbraucher/Erzeuger v des Teilnetzes TN zu berücksichtigen. Beispielsweise kann berücksichtigt werden, dass keine beliebig kleinen elektrischen Ströme geregelt werden können oder dass gewisse Verbraucher v einen Mindeststrom benötigten, um noch fehlerfrei zu funktionieren. Das weiteren erlaubt das erfindungsgemäße Verfahren die Rückregelung der Verbraucher v zu priorisieren, sodass in einer typischen Anwendung zuerst Verbraucher v bestimmter Abteilungen(beispielsweise Fahrzeugbatterien von Innendienst- Mitarbeitern eines Unternehmens) in deren Leistungsaufnahme beschränkt werden. Das Verfahren berücksichtigt auch einen Worst Case, nämlich das Auftreten einer großen Überlastung des Teilnetzes TN. In diesem Falle können durch das Verfahren gezielt bestimmte Lasten bzw. Verbraucher v abgeworfen (d.h. komplett abgeschaltet) werden. sodass zwar diese Lasten bzw. Verbraucher v vom Teilnetz TN getrennt werden jedoch die Stabilität des restlichen Netzes gewährleistet wird und somit ein totaler Ausfall des Teilnetzes TN verhindert wird. Das weiteren umfasst das Verfahren auch den Vorgang eine elektrische Leistung der regelbaren Lasten bzw. Verbraucher v nach dem Rückgang bzw. nach der Verhinderung der Überlast wieder schrittweise zu erhöhen bis die zuvor in der Leistung begrenzten oder abgeworfen Lasten erreicht werden.

Das Verfahren umfasst im Wesentlichen zwei Haupt-Funktionen nämlich einerseits eine Erhöhungsfunktion und andererseits eine Verringerungsfunktion.

Die Funktion "Verringerung" des Verfahrens berechnet im Falle einer im Schritt S0 erkannten drohenden Überlast des Teilversorgungsnetzes TN in den Schritten S1-S7 neue Sollströme Ivsoll für die regelbaren Lasten bzw. steuerbaren Verbraucher v und reduziert im Anschluss in Schritt S8 die elektrischen Ströme dieser steuerbaren Lasten bzw. Verbraucher auf diese berechneten Sollströme Ivsoll auch physisch.

Liegt in dem Teilnetz TN keine Überlast mehr vor, so wird die Funktion "Erhöhung" aktiv und beginnt im Schritt S9 den elektrischen Strom der Verbraucher v wieder zu erhöhen. Hierzu können für jede Gruppe Gi Erhöhungsrunden berechnet werden, wobei die Gruppe Gi mit der höchsten Priorität p die meisten Erhöhungsrunden erhält. Die Anzahl ki der Erhöhungsrunden bei einer Gruppe Gi mit einer Priorität pi hängt vorzugsweise von der Kardinalität N der eingeteilten Gruppen G ab (ki=N-pi). Die Gruppe GN mit der niedrigsten Priorität pN hat genau eine Erhöhungsrunde.

Es wird mit der Gruppe G1 mit der höchsten Priorität p1 gestartet. Der Stromerhöhungsschritt beträgt beispielsweise 1 Amp. Für Verbraucher v, die abgeschaltet wurden beträgt dieser Stromerhöhungsschritt dem hinterlegtem Hysterese-Strom. Falls der aktuelle Strom Iaktv des Verbrauchers v zuzüglich des Erhöhungsstromes nicht den zulässigen Maximalstrom Imax-v des Verbrauchers v überschreitet, wird der Strom des Verbrauchers v in diesem Schritt um den Erhöhungsstrom erhöht. Dies wird mit allen Verbrauchern v innerhalb einer Gruppe G wiederholt. Die Anzahl der Erhöhungsrunden innerhalb einer Gruppe G ist durch die Priorität p der jeweiligen Gruppe G definiert. Dann wird mit der nächsten Gruppe G in gleicher Weise fortgefahren.

Durch diesen Erhöhungsalgorithmus wird sichergestellt. dass jeder Verbraucher v unabhängig von der Priorität p zumindest den Hysterese-Strom bzw. den Mindeststrom wiedererhält, sofern es die aktuelle Situation in der Netzinfrastruktur zulässt.

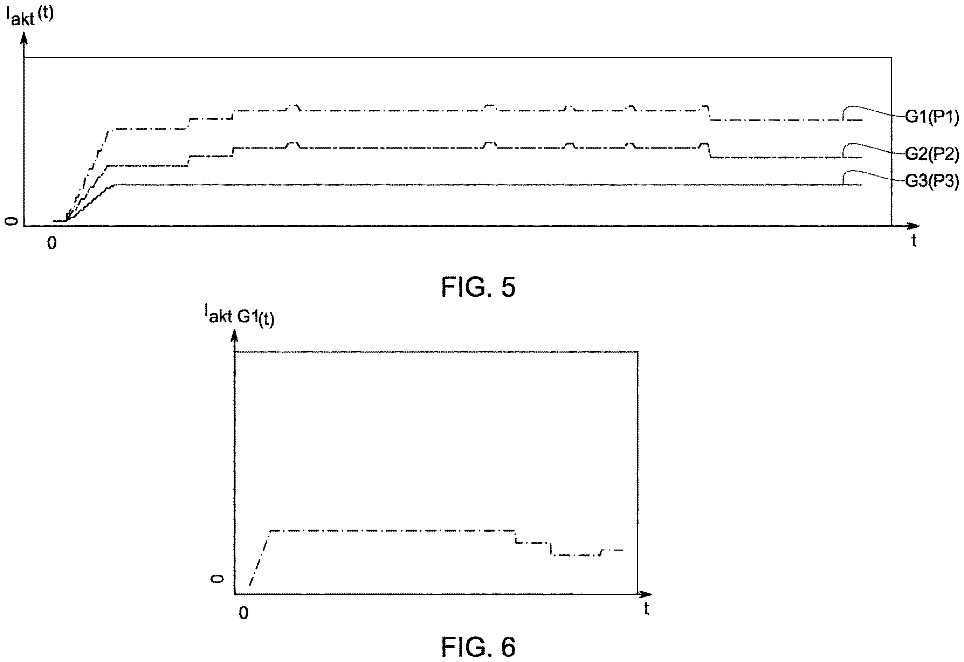

Fig. 5 bis 8 zeigen Diagramme zur Erläuterung der Funktionsweise des erfindungsgemäßen Verfahrens.

Fig.5 zeigt aktuell verbrauchte Ströme Iakt für drei verschiedene Gruppen G1, G2, G3 unterschiedlicher Prioritäten p1, p2, p3. Der aktuelle Strom IaktG1 der Gruppe G1 von Verbrauchern v mit der höchsten Priorität p1 ist größer als der aktuelle Strom IaktG2 der Gruppe G2 von Verbrauchern v mit der zweithöchsten Priorität p2, der wiederum größer ist als der aktuelle Strom IaktG3 der Gruppe G3 von Verbrauchern v mit der niedrigsten Priorität p3.( IaktG1 > IaktG2> IaktG3)

Fig. 6 zeigt eine Simulation des aktuellen Stromverbrauchs der Gruppe G1 von Verbrauchern v mit der höchsten Priorität p1.

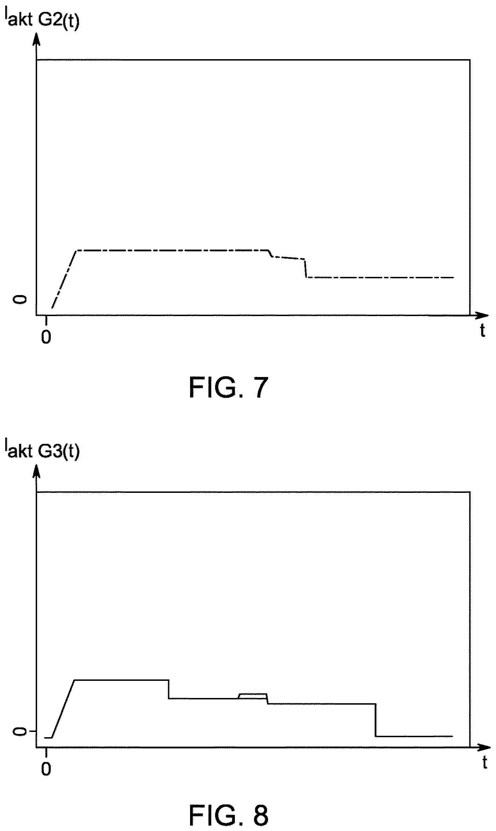

Fig. 7 zeigt eine Simulation des aktuellen Stromverbrauchs der Gruppe G2 von Verbrauchern v mit der zweithöchsten Priorität p2.

Fig. 8 zeigt eine Simulation des aktuellen Stromverbrauchs der Gruppe G1 von Verbrauchern v mit der niedrigsten Priorität p3.

Wie man in den Fig.6 bis 8 erkennen kann wird bei Bedarf der Stromverbrauch der Verbraucher v der Gruppe G1 mit der höchsten Priorität p1 im Vergleich zu dem Stromverbrauch der beiden übrigen Gruppen G2, G3 als letzter reduziert bzw. runtergefahren. Wie man in Fig.8 erkennen kann wird in dem dargestellten Beispiel zu einem gewissen Zeitpunkt die ganze Gruppe G3 an Verbrauchern v mit der niedrigsten Priorität p3 abgeschaltet.

Die Signaldiagramme gemäß Figuren 5-8 werden einem Nutzer bei einer möglichen Implementierung über eine grafische Nutzerschnittstelle eines Rechners des Teilnetzes TN oder über eine grafische Nutzerschnittstelle einer entfernten über ein Datennetzwerk damit verbundenen Steuerzentrale angezeigt.

Das erfindungsgemäße computerimplementierte Verfahren eignet sich für eine große Anzahl an Anwendungsfällen. Beispielsweise kann das Verfahren im Hintergrund bei einem Lade-Netz eines Firmenparkplatzes eines Unternehmens laufen. Eine weitere Anwendung ist beispielsweise im Bereich der Logistik das Aufladen einer Flotte von elektrisch betriebenen Gabelstaplern oder sonstigen Transportfahrzeugen als Verbraucher v. Die Verbraucher v können auch Haushaltsgeräte eines Hausnetzes oder Maschinen einer Automatisierungsanlage umfassen. Es kann sich beispielsweise auch um eine Mischung dieser Geräte/Lasten handeln. Beispielsweise kann es sich bei einem produzierenden Betrieb um eine heterogene Zusammensetzung dieser Lasten bzw. Verbraucher v handeln, insbesondere Firmen-PKW, Logistikflotte, Maschinen, Anlagen usw.

**Patentansprüche**

1. Verfahren zur Vermeidung eines Stromausfalls in mindestens einem elektrischen Teilnetz (TN), das zur Stromversorgung von elektrischen Verbrauchern, v, des Teilnetzes (TN) an ein Übertragungsnetz (ÜN) angeschlossen ist, wobei die elektrischen Verbraucher, v, des Teilnetzes (TN) in eine Anzahl, N, verschiedener Gruppen (G1, G2,...Gi...GN) mit unterschiedlicher Prioritäten (p1,p2, ...pi...pN) eingeteilt sind, mit den Schritten:

   Berechnen (S1) einer insgesamt erforderlichen Gesamtreduktions-Strommenge, Ired-gesamt, mit welcher die durch alle Verbraucher, v, des Teilnetzes (TN) aktuell verbrauchte elektrische Gesamt-Strommenge, Iakt-gesamt, zur Vermeidung einer erkannten Überlast in dem Teilnetz (TN) zu reduzieren ist;
   Ermitteln (S2) einer Gruppen-Sollstrommenge (IsollGi) für jede eingeteilte Gruppe (Gi) von Verbrauchern, v, auf Basis der insgesamt erforderlichen Gesamtreduktions-Strommenge, Ired-gesamt, und einer durch die jeweilige Gruppe (Gi) einsparbaren Strommenge (IsparGi); Berechnen (S3) von Sollströmen (Isoll-v) für die elektrischen Verbraucher, v, der eingeteilten Gruppen (G1, G2,...Gi...GN) des Teilnetzes (TN) in Abhängigkeit der ermittelten Gruppen-Sollstrommenge (IsollGi); und
   Reduzieren (S4) der aktuell durch die Verbraucher, v, der jeweiligen Gruppe (Gi) verbrauchten Strommenge so lange, bis die für die jeweilige Gruppe (Gi) ermittelte Gruppen-Sollstrommenge (Isoll Gi) erreicht wird.

2. Verfahren nach Anspruch 1,
   wobei die Sollströme (Isoll-v) von Verbrauchern, v, innerhalb einer eingeteilten Gruppe Gruppe(Gi) aus der Gruppen-Sollstrommenge (IsollGi) der jeweiligen Gruppe abgeleitet werden.

3. Verfahren nach Anspruch 2,
   wobei zur Berechnung (S3) der Sollströme (Isoll-v) für die elektrischen Verbraucher, v, der eingeteilten Gruppen (G1, G2,...Gi...GN) des Teilnetzes (TN) für jede der eingeteilten Gruppen (Gi) von elektrischen Verbrauchern, v, des Teilnetzes (TN) beginnend mit der Gruppe (GN) von elektrischen Verbrauchern mit der niedrigsten Priorität (pN) die folgenden Schritte (S2A, S2B) ausgeführt werden:

   Berechnen (S3A) der durch jede eingeteilte Gruppe (Gi) jeweils einsparbaren Strommenge (IsparGi) als Differenz zwischen einer durch alle Verbraucher, v, der jeweiligen Gruppe (Gi) aktuell verbrauchten elektrischen Gruppen-Strommenge, IaktGi, der Gruppe (Gi) und einer für die Stromversorgung aller Verbraucher der jeweiligen Gruppe (Gi) zumindest erforderlichen Minimal-Gruppen-Strommenge, IminGi der Gruppe (Gi);
   Berechnen (S3B) für jede eingeteilte Gruppe (Gi) ausgehend von der insgesamt erforderlichen Gesamtreduktions-Strommenge, Ired-gesamt, einer verbleibenden Reststrommenge Iresti ,indem von der für die vorherige Gruppe (Gi+1) berechneten Reststrommenge (Irest i+1) die berechnete einsparbare Strommenge der jeweiligen Gruppe (Gi) subtrahiert wird.

4. Verfahren nach Anspruch 3,
   wobei die Teilschritte (S3A, S3B) zur Berechnung der Soll-Ströme (Isoll-v) der Verbraucher, v, so lange wiederholt werden, bis die berechnete verbleibende Rest-Strommenge, Iresti, größer null ist (Iresti >0) oder bis die Gruppe (G1) von Verbrauchern, v, mit der höchsten Priorität (G1) erreicht wird.

5. Verfahren nach einem der vorangehenden Ansprüche 1 bis 4,
   wobei nach Berechnung der Sollströme (Isoll-v) der Verbraucher v für jede der eingeteilten Gruppen (Gi) von elektrischen Verbrauchern, v, des Teilnetzes (TN) beginnend mit der Gruppe (GN) von elektrischen Verbrauchern mit der niedrigsten Priorität (pN) bis hin zum Erreichen der Gruppe (G1) von elektrischen Verbrauchern mit der höchsten Priorität (p1) die aktuell durch die Verbraucher, v, der jeweiligen Gruppe(Gi) verbrauchte Strommenge, IaktGi, rechnerisch solange reduziert wird (S4) bis für die jeweilige Gruppe (Gi) berechnete (S2) Gruppen-Sollstrommenge, Isoll Gi, erreicht wird.

6. Verfahren nach einem der vorangehenden Ansprüche 1 bis 5,
   wobei eine innerhalb des Teilnetzes(TN) demnächst auftretenden Überlast, automatisch erkannt (S0) wird, sobald eine aktuell verbrauchte Gesamtstrommenge, Iakt-gesamt, aller Verbraucher, v, aller Gruppen (G1-GN) des Teilnetzes (TN) eine vorgegebene maximal zulässige Strommenge, Imax-TN, des Teilnetzes (TN) übertrifft.

7. Verfahren nach einem der vorangehenden Ansprüche 1 bis 6,

wobei gemessene oder gemeldete aktuell verbrauchte elektrischen Strommengen, lakt-v, aller Verbraucher, v, einer eingeteilten Gruppe (Gi) zu einer aktuell verbrauchten Strommenge, laktGi, der Gruppe (Gi) aufsummiert werden, und
wobei die aktuell verbrauchten elektrischen Strommengen, laktGi aller eingeteilten Gruppen (G1 bis GN) von Verbrauchern, v, des Teilnetzes (TN) zur Berechnung der aktuell verbrauchten Gesamtstrommenge, lakt-gesamt, des Teilnetzes (TN) aufsummiert werden.

8. Verfahren nach Anspruch 7,
wobei die erforderliche Gesamtreduktions-Strommenge, Ired-gesamt, mit welcher die durch alle Verbraucher, v, des Teilnetzes (TN) aktuell verbrauchte Gesamt-Strommenge, lakt-gesamt, zur Vermeidung der Überlast in dem Teilnetz (TN) zu reduzieren ist, als Differenz zwischen der aktuell verbrauchten Gesamtstrommenge, lakt-gesamt, aller Verbraucher, v, des Teilnetzes (TN) und der vorgegebenen maximal zulässigen Strommenge, Imax-TN, des Teilnetzes (TN) berechnet wird.

9. Verfahren nach einem der vorangehenden Ansprüche,
wobei, falls die berechnete verbleibende Rest-Strommenge, Iresti, nach Erreichen der Gruppe (G1) von elektrischen Verbrauchern mit der höchsten Priorität (p1), größer als null ist (Irest1 >0) für jede der eingeteilten Gruppen (Gi) von elektrischen Verbrauchern des Teilnetzes (TN) beginnend mit der Gruppe (GN) von elektrischen Verbrauchern mit der niedrigsten Priorität (pN) die folgenden Schritte (S) ausgeführt werden:

Markieren (S5) der jeweiligen Gruppe (Gi) als eine abschaltbare Gruppe (Allow to Shut Down), und
Berechnen (S6) für jeden Verbraucher, v, der markierten Gruppe (Gi) einer einsparbaren Strommenge, Iv, die durch ein Abschalten (Shut Down) des betreffenden Verbrauchers, v, eingespart werden kann;
Reduzieren (S7) der verbleibenden Reststrommenge, Iresti, rechnerisch, um die durch Abschalten des Verbrauchers, v, einsparbare Strommenge, Iv;
Wiederholen der obigen Schritte (S5, S6, S7) solange die berechnete verbleibende Rest-Strommenge, Iresti, größer null ist (Iresti >0) oder solange bis die Gruppe (G1) von Verbrauchern, v, mit der höchsten Priorität (G1) berücksichtigt worden ist.

10. Verfahren nach Anspruch 9,
wobei im Anschluss an die Berechnung der Sollströme (Isoll-v) der Verbraucher, v, des Teilnetzes (TN) (S1-S7) für jede Gruppe (Gi) die aktuell verbrauchte Strommenge, lakt-v, eines jeden Verbrauchers, v, innerhalb der jeweiligen Gruppe (Gi) schrittweise in einem Round-Robin-Prozess solange um eine Stromverminderungsmenge (Delta-Iminus) physikalisch reduziert (S8) wird, bis die für die betreffende Gruppe (Gi) ermittelte (S2) Gruppen-Sollstrommenge ( IsollGi) erreicht wird.

11. Verfahren nach einem der vorangehenden Ansprüche 1 bis 10,
wobei, falls eine Gruppe (Gi) von Verbrauchern, v, als eine abschaltbare Gruppe (Allow to Shutdown) markiert worden ist (S5), der Stromverbrauch eines Verbrauchers, v, innerhalb der markierten Gruppe (Gi) auf null reduziert wird, wenn der Stromverbrauch des Verbrauchers, v, eine für diesen Verbraucher, v, hinterlegte Minimalstrommenge, Imin-v, unterschreitet.

12. Verfahren nach einem der vorangehenden Ansprüche 1 bis 11,
wobei, falls nach der Reduzierung (S8) des Stromverbrauchs der Verbraucher aller Gruppen (G1-GN) des Teilnetzes (TN) keine Gefahr eines Auftretens einer Überlast in dem Teilnetz (TN) mehr besteht, für jede der eingeteilten Gruppen (Gi) von elektrischen Verbrauchern des Teilnetzes (TN) der Stromverbrauch der Verbraucher, v, beginnend mit der Gruppe (G1) von elektrischen Verbrauchern mit der höchsten Priorität (p1) bis hin zu der Gruppe (GN) mit der niedrigsten Priorität (pN) erhöht (S9) wird, indem eine aktuell verbrauchte Strommenge, lakt-v, eines jeden Verbrauchers, v, innerhalb der jeweiligen Gruppe (Gi) um eine Stromerhöhungsmenge (Delta-Iplus) in einem oder mehreren Erhöhungsschritten erhöht wird, solange hierdurch keine zulässige Maximalstrommenge, Imax-v, des betreffenden Verbrauchers, v, überschritten wird.

13. Verfahren nach Anspruch 12,
wobei eine Anzahl, ki, der vorgenommenen Erhöhungsschritte zur Erhöhung der aktuell verbrauchten Strommenge, lakt-v, eines Verbrauchers, v, innerhalb einer Gruppe (Gi) von der Priorität (pi) der jeweiligen Gruppe (Gi) und der Anzahl, N, der eingeteilten Gruppen, G, abhängt (ki=N-pi).

**14.** Verfahren nach einem der vorangehenden Ansprüche 1 bis 13,
wobei die Verbraucher, v, des Teilnetzes (TN) regelbare und/oder abschaltbare Lasten und/oder an Ladepunkten des Teilnetzes (TN) anschließbare Lasten aufweisen

**15.** Verfahren nach Anspruch 14,
wobei die Verbraucher, v, des Teilnetzes (TN) fest installierte Lasten, insbesondere Wärmepumpen oder Inverter, und anschließbaren Lasten, insbesondere an Ladepunkten des Teilnetzes (TN) anschließbare Fahrzeugbatterien von Elektrofahrzeugen aufweisen.

**16.** Verfahren nach Anspruch 15,
wobei eine Last beim Anschluss an einen Ladepunkt des Teilnetzes (TN) dynamisch in eine Gruppe (Gi) in Anhängigkeit mindestens eines bereitgestellten Einteilungskriteriums eingeteilt wird.

**17.** Verfahren nach einem der vorangehenden Ansprüche 12 bis 16,
wobei die Stromerhöhungsmenge (Delta-Iplus) und die Stromreduzierungsmenge (Delta-Iminus) von einem Typ des Verbrauchers, v, abhängt.

**18.** Verfahren nach Anspruch 17,
wobei zumindest ein Teil der elektrischen Verbraucher, v, eines Teilnetzes (TN) jeweils seine zugehörige erlaubte Stromerhöhungsmenge (Delta-Iplus) und/oder seine erlaubte Stromreduzierungsmenge (Delta-Iminus) einer Steuerung des Teilnetzes (TN) mitteilt.

**19.** Elektrisches Teilnetz, TN, insbesondere Lade-Netz, mit mehreren elektrischen Verbrauchern, v, und mit einer Steuerung zur Durchführung eines Verfahrens zur Vermeidung eines Stromausfalls in dem Teilnetz, TN, nach einem der vorangehenden Ansprüche 1 bis 18.

FIG. 1

FIG. 2

$I_{max} = 300\ A$

TN-A     Meter    TN-B

Meter   $I_{max} = 50\ A$

Meter   $I_{max} = 30\ A$

V1 V2 V3 V4 V5 V6 V7 V8

$I_{act} = 30\ A$
$I_{min} = 12\ A$

$I_{act} = 50\ A$
$I_{min} = 12\ A$

$I_{act} = 20\ A$
$I_{min} = 6\ A$

$I_{act} = 40\ A$
$I_{min} = 24\ A$

$I_{act} = 10\ A$
$I_{min} = 6\ A$

$I_{act} = 30\ A$
$I_{min} = 24\ A$

$I_{to\_reduce} = (30+50+20) - 50\ A = 50\ A$

$I_{to\_reduce} = (40+10+30)\ A - 30\ A = 50\ A$

$I_{rest} = 50\ A$

$I_{rest} = 0\ A$   $I_{reduce} = 0\ A$   $I_{rest} = 0\ A$   $I_{reduce} = 36\ A$   $I_{rest} = 36\ A$   $I_{reduce} = 14\ A$

$I_{rest} = 50\ A$

$I_{rest} = 24\ A$   $I_{reduce} = 16\ A$   $I_{rest} = 40\ A$   $I_{reduce} = 4\ A$   $I_{rest} = 44\ A$   $I_{reduce} = 6\ A$

$I_{act} = 30\ A$
$I_{min} = 12\ A$
$I_{limit} = 30\ A$

$I_{act} = 50\ A$
$I_{min} = 12\ A$
$I_{limit} = 14\ A$

$I_{act} = 20A$
$I_{min} = 6\ A$
$I_{limit} = 6\ A$

$I_{act} = 40\ A$
$I_{min} = 24\ A$
$I_{limit} = 24\ A$

$I_{act} = 10\ A$
$I_{min} = 6\ A$
$I_{limit} = 6\ A$

$I_{act} = 30A$
$I_{min} = 24\ A$
$I_{limit} = 24\ A$

$I_{rest} = 24\ A$

$I_{rest} = 0\ A$   $I_{reduce} = 0\ A$   $I_{rest} = 0\ A$   $I_{reduce} = 0\ A$   $I_{rest} = 0\ A$   $I_{rest} = 24\ A$   $I_{reduce} = 24\ A$

$I_{act} = 30\ A$
$I_{limit} = 24\ A$

$I_{act} = 10\ A$
$I_{limit} = 6\ A$

$I_{act} = 30A$
$I_{limit} = 24\ A$
Shutdown -> -24 A

EP 4 443 687 A1

FIG. 3

FIG. 4

$I_{akt}(t)$

G1(P1)

G2(P2)

G3(P3)

0

0                                                                 t

## FIG. 5

EP 4 443 687 A1

$I_{akt\ G1}(t)$

0

0                         t

## FIG. 6

$I_{akt\ G2}(t)$

FIG. 7

$I_{akt\ G3}(t)$

FIG. 8

**Europäisches Patentamt**
**European Patent Office**
**Office européen des brevets**

# EUROPÄISCHER RECHERCHENBERICHT

**Nummer der Anmeldung**

EP 23 16 6512

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/244060 A1 (JOKO SHINGO [JP]) 28. August 2014 (2014-08-28) | 1-10, 12-19 | INV. H02J3/01 H02J3/14 |
| A | * Absätze [0033] – [0097]; Ansprüche 1-7; Abbildungen 1-4 *<br>----- | 11 | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 19. September 2023 | Telega, Pawel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 16 6512

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-09-2023

| Im Recherchenbericht angeführtes Patentdokument | Datum der Veröffentlichung | Mitglied(er) der Patentfamilie | Datum der Veröffentlichung |
|---|---|---|---|
| US 2014244060 A1 | 28-08-2014 | EP 2765680 A1 | 13-08-2014 |
| | | JP 5922138 B2 | 24-05-2016 |
| | | JP WO2013047116 A1 | 26-03-2015 |
| | | US 2014244060 A1 | 28-08-2014 |
| | | WO 2013047116 A1 | 04-04-2013 |

Für nähere Einzelheiten zu diesem Anhang : siehe Amtsblatt des Europäischen Patentamts, Nr.12/82

EPO FORM P0461